# FASCICULE DE BREVET EUROPEEN

(11) **EP 0 811 863 B1**
(45) Date de publication et mention de la délivrance du brevet: **14.11.2007**
(21) Numéro de dépôt: 97401249.4
(22) Date de dépôt: 04.06.1997
(51) Int. Cl.: G02B 6/42

(54) **Positionnement vertical d'un composant optoélectronique sur un support, en regard d'un guide optique intégré à ce support**
Vertikale Positionierung eines optoelektronischen Bauelements auf einem Träger in Bezug auf einen, auf diesem Träger integrierten optischer Leiter
Vertical positioning of an optoelectronical component on a carrier relative to an optical conductor integrated on this carrier

(30) Priorité: 06.06.1996 FR 9606999
(43) Date de publication de la demande: 10.12.1997
(73) Titulaire: COMMISSARIAT A L'ENERGIE ATOMIQUE, 75015 Paris (FR)
(72) Inventeur: Grand, Gilles, 38000 Grenoble (FR); Gidon, Pierre, 38130 Echirolles (FR)
(74) Mandataire: Poulin, Gérard

(56) Documents cités:
- ELECTRONICS LETTERS, vol. 30, no. 22, 27 Octobre 1994, pages 1888-1890, XP000479781 MINO S ET AL: "OPTOELECTRONIC HYBRID INTEGRATED LASER DIODE MODULE USING PLANAR LIGHTWAVE CIRCUIT PLATFORM"
- PROCEEDINGS OF THE LASERS AND ELECTRO-OPTICS SOCIETY ANNUAL MEETING (LEOS), SAN JOSE, NOV. 15 - 18, 1993 CO-LOCATED WITH OPTCON '93, no. -, 15 Novembre 1993, INSTITUTE OF ELECTRICAL AND ELECTRONICS ENGINEERS, page 204/205 XP000463969 YAMADA Y ET AL: "LINBO3 CHIP ASSEMBLY ON SILICA-BASED WAVEGUIDE ON TERRACED SILICON SUBSTRATE"
- JOURNAL OF LIGHTWAVE TECHNOLOGY, vol. 10, no. 3, 1 Mars 1992, pages 336-340, XP000272892 FRIEDRICH E E L ET AL: "HYBRID INTEGRATION OF SEMICONDUCTOR LASERS WITH SI-BASED SINGLE-MODE RIDGE WAVEGUIDES"
- Y. YAMADA ET AL.: "SILICA-BASED OPTICAL WAVEGUIDE ON TERRACED SILICON SUBSTRATE AS HYBRID INTEGRATION PLATFORM" ELECTRONICS LETTERS, vol. 29, no. 5, 4 mars 1993 (1993-03-04), pages 444-446,

## Description

La présente invention concerne le positionnement vertical d'un composant optoélectronique sur un support pour le connecter optiquement à un guide optique intégré à ce support.

Le développement de l'optique intégrée et la miniaturisation des composants optoélectroniques ont conduit à la réalisation de dispositifs hybrides dans lesquels des composants en général actifs (diodes laser, modulateurs, photodétecteurs, etc.) sont rapportés sur un support pour y être connectés optiquement à des composants dits passifs (des guides optiques par exemple) intégrés sur ou dans ce support. Un tel support peut être constitué à partir d'un substrat en silicium sur lequel on a déposé de la silice pour y réaliser un ou plusieurs guides optiques.

Beaucoup de travaux ont été consacrés à l'obtention de circuits optoélectroniques hybrides. La plus grande partie de ces travaux concerne des cas pour lesquels l'alignement optique entre le composant rapporté et le guide optique correspondant peut être qualifié de simple : typiquement, un photodétecteur éclairé par un faisceau de lumière véhiculé par un guide optique. Une petite partie de ces travaux concerne des cas pour lesquels l'alignement optique entre le composant rapporté et le guide optique correspondant constitue un couplage qualifié d'exigeant : par exemple l'alignement d'une source laser avec un guide optique. On comprend que dans ce cas l'alignement doit être le meilleur possible pour disposer d'un rendement d'utilisation maximum.

Une diode laser destinée à être rapportée sur un support pour y être connectée à un guide optique intégré est un composant qui a son ruban émetteur situé à proximité d'une face du composant afin de pouvoir être connecté optiquement à un guide optique qui est réalisé en surface sur le support. Lors de sa mise en place, la diode laser se trouve donc en position retournée sur le support (position dite "upside down" en anglais).

L'alignement se fait par référence aux trois directions de l'espace. En considérant un support plan, l'alignement dans les deux directions correspondant au plan du support peut se faire par plusieurs méthodes connues (par des butées mécaniques, des microbilles, etc.) qui sont satisfaisantes. L'alignement dans une direction verticale au plan du support est difficile à obtenir à cause du procédé mis en oeuvre pour obtenir le guide optique. En effet, un guide optique du type silice sur silicium (par exemple monomode à 1,3 µm/1,55 µm) est généralement constitué par la superposition de :
- une couche de silice, ou couche de confinement inférieure, de plus de 12 µm d'épaisseur, assurant l'isolation optique avec le support en silicium,
- un coeur de guide plus mince, de 4 à 6 µm d'épaisseur, en silice dopée pour augmenter son indice de réfraction, gravé ou non selon que le guide est du type planaire ou du type canal,
- une couche de silice, ou couche de confinement supérieure, de plus de 10 µm d'épaisseur, isolant le coeur de guide de l'air ambiant.

Les couches de silice de ce guide optique sont déposées par exemple par un procédé de dépôt chimique en phase vapeur assisté par plasma ou PECVD (d'après l'anglais "Plasma Enhanced Chemical Vapor Deposition"). L'épaisseur de ces couches est difficilement contrôlable. L'imprécision relative peut être très élevée : typiquement, jusqu'à 10% pour la couche de confinement supérieure, c'est-à-dire ± 1 µm, et 3% pour la couche de confinement inférieure, c'est-à-dire ± 0,4 µm. Or, l'alignement dans la position verticale est classiquement obtenue soit par référence au sommet de la couche de confinement supérieure, soit par référence à la face du support en silicium sur laquelle ont été déposées les couches de silice. Ces références mécaniques sont totalement incompatibles avec un alignement optique correct entre le guide optique et le composant à rapporter (typiquement ± 0,25 µm dans le cas d'une structure à diode laser).

Parmi les documents de l'art connu se rapportant au domaine de l'invention on peut citer les articles suivants :
- "Film-Level Hybrid Integration of AlGaAs Laser Diode with Glass Waveguide on Si Substrate" de M. Yanagisawa et al., paru dans la revue IEEE Photonics Technology Letters, Vol. 4, N°1, Janvier 1992, pages 21-23, (Référence 1) ;
- "Silica-based Optical Waveguide on Terraced Silicon Substrate as Hybrid Integration Platform" de Y. Yamada et al., paru dans la revue Electronics Letters, Vol. 29, N° 5, pages 444-446, (Référence 2) ;
- "A High-Density, Four-Channel OEIC Transceiver Module Utilizing Planar-Processed Optical Waveguides and Flip-Chip, Solder-Bump Technology" de K.P. Jackson et al., paru dans la revue Journal of Lightwave Technology, Vol. 12, N° 7, Juillet 1994, pages 1185-1191, (Référence 3) ;
- "Hybrid Integration of Semiconductor Lasers with Si-Based Single-Mode Ridge Waveguides" d'E.E.L. Friedrich et al., paru dans Journal of Lightwave Technology, Vol. 10, N° 3, Mars 1992, pages 336-340, (Référence 4) ;
- FR-A-2 694 841 déposé par le Commissariat à l'Energie Atomique et correspondant à US-A-5 321 786, (Référence 5).

Selon la Référence 1, c'est le support en silicium qui constitue la référence mécanique verticale pour le report du composant (une diode laser). Le composant est ajusté à l'épaisseur de la couche de confinement inférieure du guide optique en déposant une nouvelle couche épitaxiée sur la face du composant destinée à venir en regard du support en silicium.

Pour la Référence 2, c'est aussi le support en silicium qui constitue la référence mécanique verticale pour le report du composant. Dans ce cas, c'est le guide optique qui est ramené, par un travail sur la couche de confinement inférieure en silice, au niveau désiré, proche de la référence mécanique constituée par le support en silicium.

Selon la Référence 3, c'est le sommet de la couche de confinement supérieure qui sert de référence mécanique, la technique de soudure par microbilles étant utilisée conjointement.

Selon les Références 4 et 5, la référence mécanique est obtenue par une gravure à partir du sommet de la couche de confinement supérieure. Dans ce cas, il y a addition de deux incertitudes : une incertitude sur le dépôt et une incertitude sur la gravure.

Pour remédier à ce problème, on propose selon la présente invention d'assurer l'alignement dans la position verticale par une référence mécanique prise sur le coeur du guide optique ou dans un plan proche du coeur. Cette référence mécanique, qui peut se situer à la base de la couche constituant le coeur du guide optique, à son sommet, entre la base et le sommet ou encore sous le coeur (dans la couche de confinement inférieure et à proximité du coeur), est beaucoup plus précise que les références mécaniques habituellement choisies (sommet de la couche de confinement supérieure ou base de la couche de confinement inférieure). En effet, la référence optique (c'est-à-dire l'axe optique du guide optique) n'est qu'à 2 ou 3 µm de cette référence mécanique et l'imprécision sur la position verticale de cette couche ne dépasse pas, en absolu, ± 0,1 µm.

L'invention a donc pour objet un support destiné à l'optoélectronique hybride, comportant au moins un guide optique intégré et constitué à partir d'un substrat sur lequel le guide optique a été réalisé par dépôt d'un matériau approprié déposé sur le substrat pour former une couche de confinement inférieure, une couche de coeur de guide et une couche de confinement supérieure, le guide optique étant destiné à être connecté optiquement à un composant optoélectronique rapporté sur le support, le support comportant des moyens de positionnement du composant afin d'assurer son alignement optique avec le guide optique, les moyens de positionnement comprenant des zones d'appui pour le composant pour assurer son positionnement vertical, caractérisé en ce que lesdites zones d'appui sont situées à un niveau choisi parmi les niveaux suivants : le sommet de la couche de coeur et un plan intermédiaire entre la base de la couche de coeur et son sommet.

L'invention a aussi pour objet des procédés de réalisation de tels supports. Dans ces procédés, le guide optique et les zones d'appui peuvent être réalisés au cours des mêmes étapes ou au cours d'étapes indépendantes.

Un procédé de réalisation permet d'obtenir des zones d'appui situées, sur le sommet de la couche de coeur. Il comprend les étapes suivantes :
- dépôt de la couche de confinement inférieure sur le substrat,
- dépôt de la couche de coeur sur la couche de confinement inférieure,
- gravure de la couche de coeur et de la couche de confinement inférieure pour faire apparaître une ébauche de guide optique et laisser subsister des parties de la couche de coeur destinées à constituer lesdites zones d'appui,
- dépôt d'une couche d'arrêt sacrificielle sur les couches déposées précédemment,
- gravure de la couche d'arrêt, la couche d'arrêt étant préservée sur les zones d'appui,
- dépôt de la couche de confinement supérieure sur les couches déposées précédemment,
- gravure de la couche de confinement supérieure pour achever le guide optique si nécessaire et pour faire apparaître les parties préservées de la couche d'arrêt,
- enlèvement des parties préservées de la couche d'arrêt pour révéler les zones d'appui.

Selon ce procédé, la gravure de la couche de coeur et la gravure de la couche de confinement inférieure peuvent être réalisées simultanément par une même gravure ou successivement par des gravures distinctes.

Un autre procédé de réalisation permet d'obtenir des zones d'appui situées dans un plan intermédiaire entre la base de la couche de coeur et son sommet. Il comprend les étapes suivantes :
- dépôt de la couche de confinement inférieure sur le substrat,
- dépôt de la couche de coeur sur la couche de confinement inférieure,
- gravure de la couche de coeur et de la couche de confinement inférieure pour faire apparaître une ébauche de guide optique et laisser subsister des parties de la couche de coeur dans lesquelles seront constituées lesdites zones d'appui,
- constitution desdites zones d'appui par gravure des parties de la couche de coeur correspondantes,
- dépôt d'une couche d'arrêt sacrificielle sur les couches déposées précédemment,
- gravure de la couche d'arrêt, la couche d'arrêt étant préservée sur les zones d'appui,
- dépôt de la couche de confinement supérieure sur les couches précédemment déposées,
- gravure de la couche de confinement supérieure pour achever le guide optique si nécessaire et pour faire apparaître les parties préservées de la couche d'arrêt,
- enlèvement des parties préservées de la couche d'arrêt pour révéler les zones d'appui.

Selon ce procédé, la gravure de la couche de coeur et la gravure de la couche de confinement inférieure peuvent être réalisées simultanément par une même gravure ou successivement par des gravures distinctes.

Un autre procédé de réalisation mettant en oeuvre la technique dite de "lift-off" permet également d'obtenir des zones d'appui situées sur le sommet de la couche de coeur. Il comprend les étapes suivantes :
- dépôt de la couche de confinement inférieure sur le substrat,
- dépôt de la couche de coeur sur la couche de confinement inférieure,
- gravure de la couche de coeur et de la couche de confinement inférieure pour faire apparaître une ébauche de guide optique et laisser subsister des parties de la couche de coeur destinées à constituer lesdites zones d'appui,
- dépôt d'une couche de résine sur les couches déposées précédemment,
- dépôt d'une couche protectrice sur la couche de résine à l'exception de la zone correspondant au futur guide optique,
- enlèvement de la zone non protégée de la couche de résine,
- dépôt de la couche de confinement supérieure sur les couches précédemment déposées,
- enlèvement de la résine subsistante par la technique dite de "lift-off", ce qui fait apparaître le guide optique et les zones d'appui.

Selon ce procédé, la gravure de la couche de coeur et la gravure de la couche de confinement inférieure peuvent être réalisées simultanément par une même gravure ou successivement par des gravures distinctes.

L'invention sera mieux comprise et d'autres avantages et particularités apparaîtront dans la description qui va suivre, donnée à titre d'exemple non limitatif, accompagnée des dessins annexés parmi lesquels :

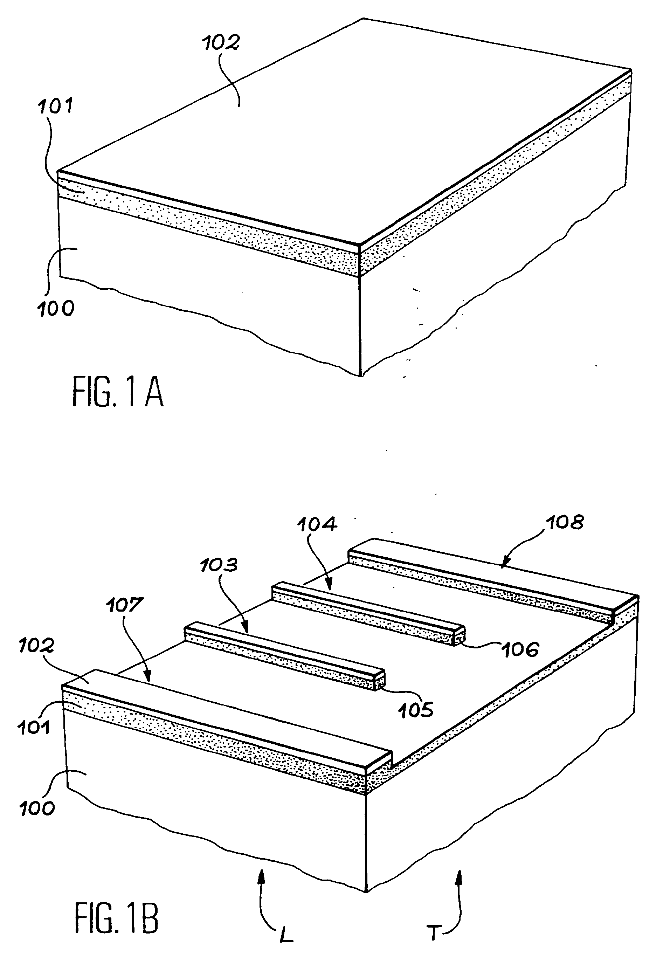

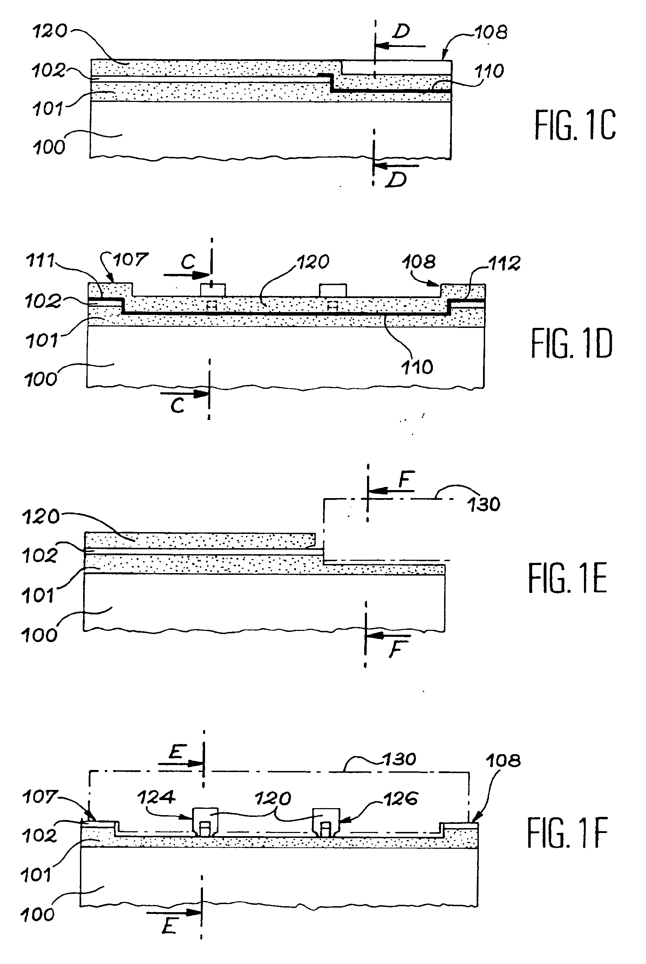

- les figures 1A à 1F sont des vues partielles qui illustrent le premier procédé de réalisation d'un support selon la présente invention, les figures 1A et 1B étant des vues en perspective, les figures 1C et 1E étant des vues en coupe longitudinale du support (selon la direction L indiquée sur la figure 1B), les figures 1D et 1F étant des vues en coupe transversale du support (selon la direction T indiquée sur la figure 1B),

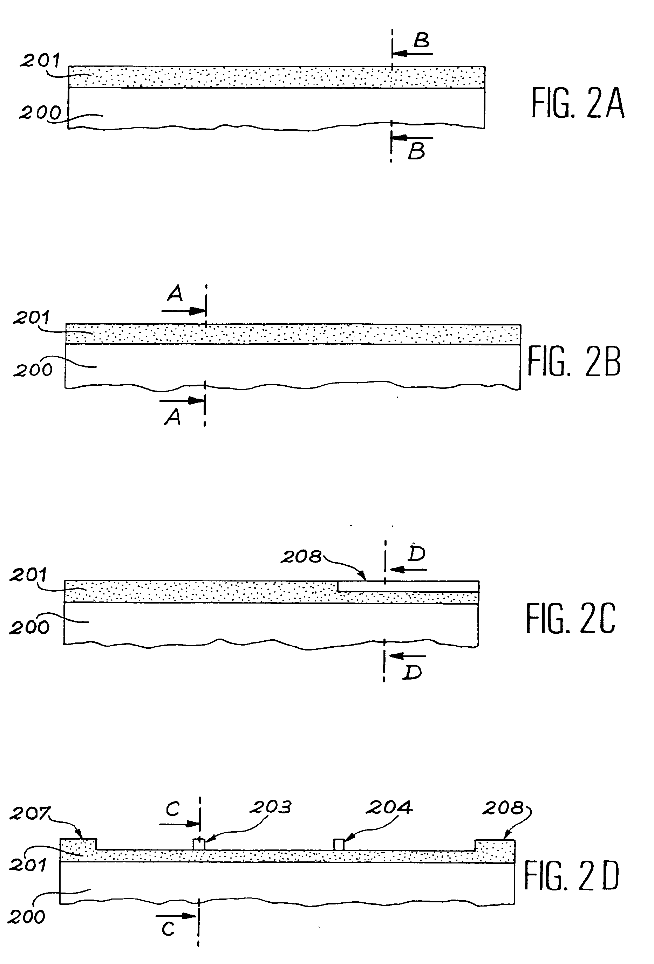

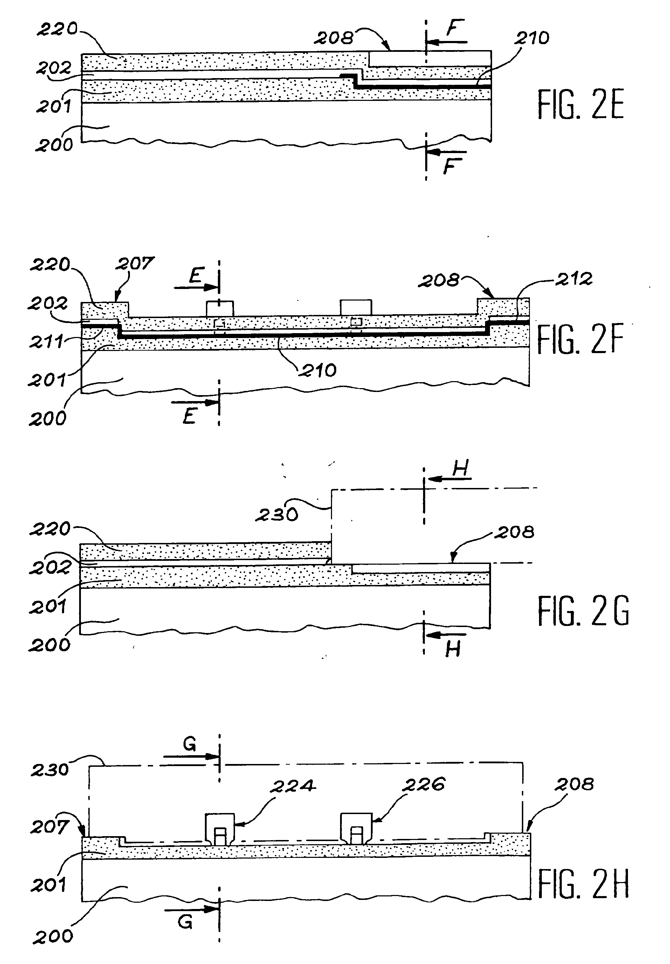

- les figures 2A à 2H sont des vues partielles qui illustrent le deuxième procédé de réalisation d'un support selon la présente invention, les figures 2A, 2C, 2E et 2G étant des vues en coupe longitudinale du support, les figures 2B, 2D, 2F et 2H étant des vues en coupe transversale du support,

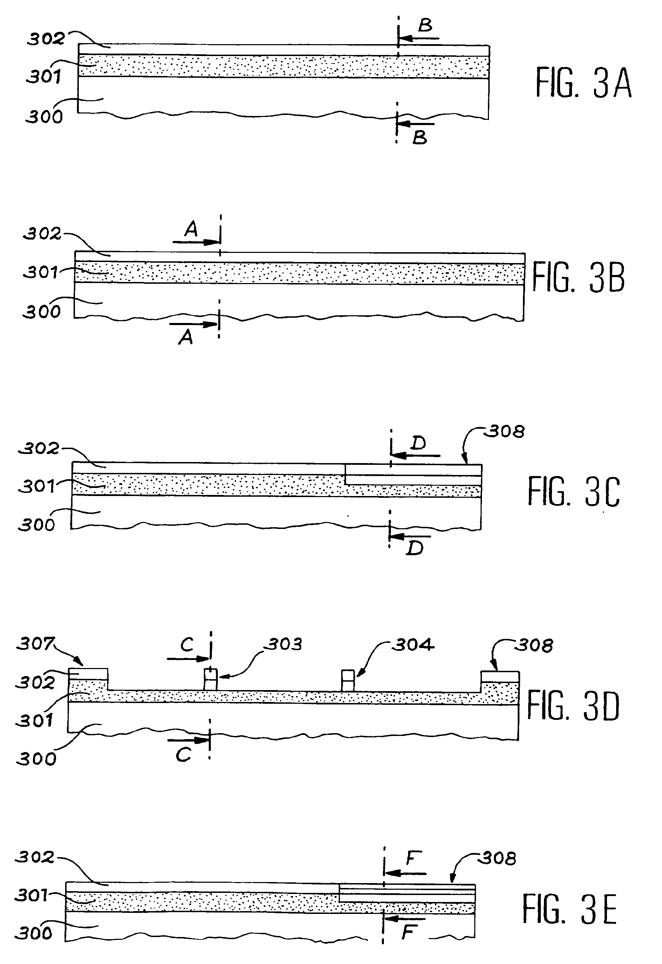

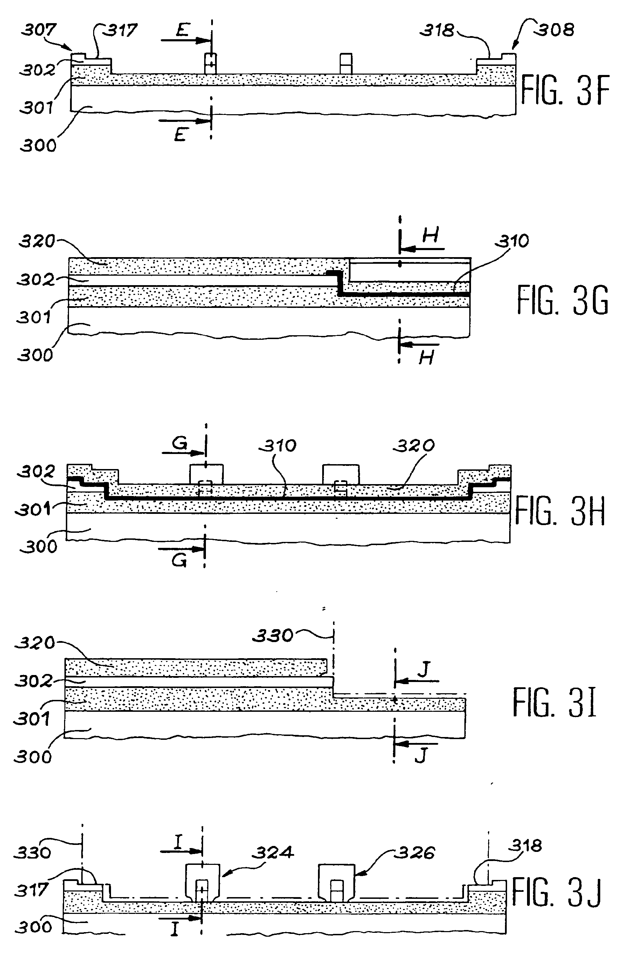

- les figures 3A à 3J sont des vues partielles qui illustrent le troisième procédé de réalisation d'un support selon la présente invention, les figures 3A, 3C, 3E, 3G et 3I étant des vues en coupe longitudinale du support, les figures 3B, 3D, 3F, 3H et 3J étant des vues en coupe transversale du support,

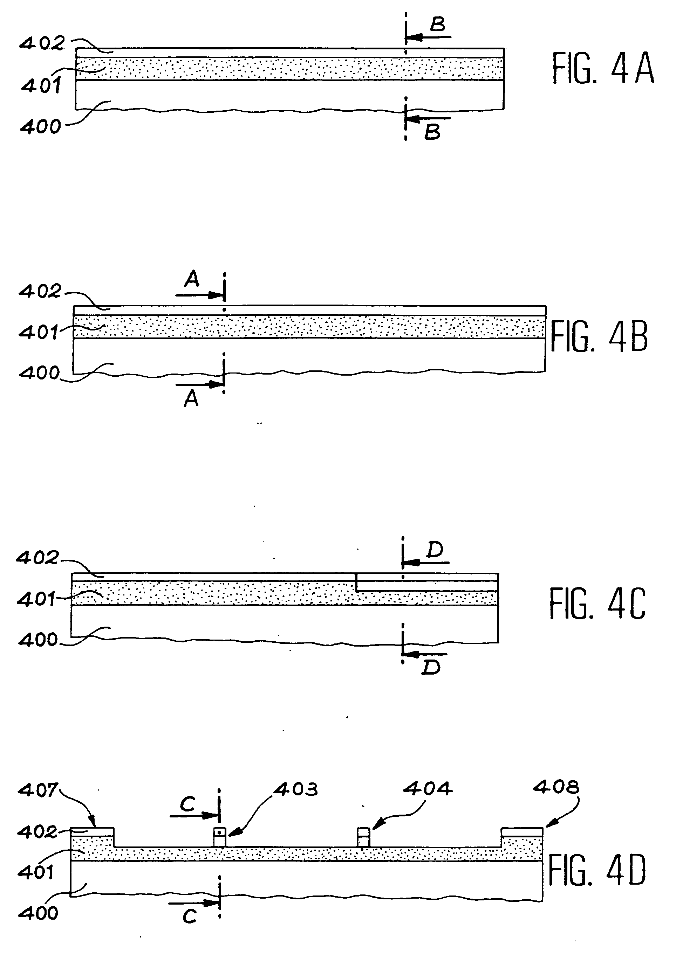

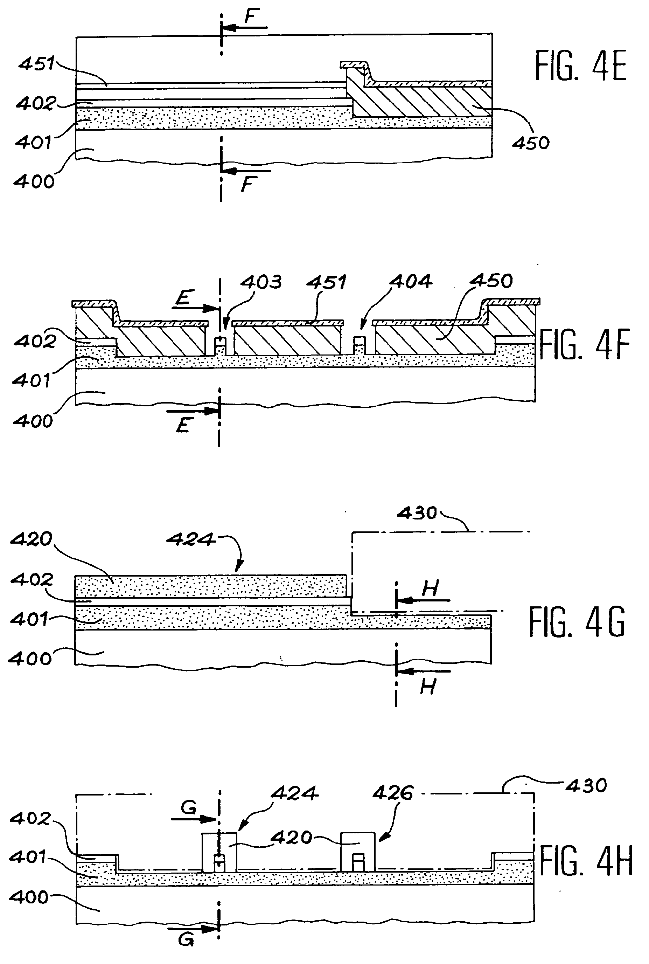

- les figures 4A à 4H sont des vues partielles qui illustrent le quatrième procédé de réalisation d'un support selon la présente invention, les figures 4A, 4C, 4E et 4G étant des vues en coupe longitudinale du support, les figures 4B, 4D, 4F et 4H étant des vues en coupe transversale du support.

Dans la suite de la description, le support sera, toujours à titre d'exemple, réalisé à partir d'un substrat en silicium sur lequel des dépôts de silice seront effectués pour obtenir des guides optiques. Seul le positionnement vertical sera décrit, le positionnement horizontal (dans les deux autres directions de l'espace) pouvant être obtenu par des techniques de l'art connu.

### Procédé de réalisation n° 1

Le premier procédé de réalisation d'un support selon la présente invention débute par le dépôt successif, sur une face d'un substrat 100 en silicium, d'une couche de confinement inférieure 101 en silice et d'une couche de coeur 102 également en silice mais dopée de manière appropriée. C'est ce que montre la figure 1A.

Les couches 101 et 102 sont ensuite gravées comme indiqué sur la figure 1B. La couche 102 est gravée sur toute son épaisseur, la couche 101 n'étant gravée que sur une partie de son épaisseur. On obtient, par masquage, des ébauches 103 et 104 de deux guides optiques dont les extrémités respectives 105 et 106 sont destinées à être connectées à des voies optiques d'un composant optoélectronique à rapporter sur le support. Le masquage a également permis d'obtenir, de chaque côté du groupe d'ébauches de guide 103 et 104, des flancs 107 et 108 alignés parallèlement aux ébauches de guide 103 et 104 et dépassant des extrémités 105 et 106 afin d'encadrer le composant à rapporter.

Une couche, dite couche d'arrêt sacrificielle, est ensuite déposée sur les couches 101 et 102 gravées. La couche d'arrêt doit être résistante à l'attaque chimique (par exemple la gravure ionique réactive) de la couche de confinement supérieure qui sera ensuite déposée. Elle peut, par contre, être éliminée par une autre méthode qui, elle, n'attaque pas la silice. La couche d'arrêt peut être métallique, par exemple en aluminium. Elle peut être gravée chimiquement, par exemple à l'aide de l'acide orthophosphorique H₃PO₄.

Les figures 1C et 1D montrent cette couche d'arrêt 110 gravée. La figure 1C est une vue en coupe selon l'axe CC de la figure 1D. La figure 1D est une vue en coupe selon l'axe DD de la figure 1C. On remarque que les parties gravées recouvrent, en 111 et 112, les flancs 107 et 108 dans la partie du support destinée à supporter le composant optoélectronique. Elles recouvrent également, mais ce n'est pas une obligation, la partie subsistante de la couche 101 située entre les flancs 107 et 108 et qui sera placée sous le composant à rapporter.

Les figures 1C et 1D montrent également la présence d'une nouvelle couche déposée, la couche de confinement supérieure 120 en silice.

La couche de confinement supérieure 120 est ensuite gravée en utilisant un masque qui permet de ne laisser subsister de cette couche de confinement supérieure 120 que la matière nécessaire à l'achèvement des guides optiques. C'est ce que représentent les figures 1E et 1F, la figure 1E étant une vue en coupe selon l'axe EE de la figure 1F et la figure 1F étant une vue en coupe selon l'axe FF de la figure 1E. Les parties subsistantes de la couche d'arrêt mises à nu ont été enlevées.

Sur les figures 1E et 1F on a fait figurer en trait mixte un composant optoélectronique 130 rapporté sur le support. Il repose, par ses bords latéraux, sur le sommet de la couche de coeur 102 et est mis en contact optique avec les guides optiques 124 et 126 constitués sur le support.

### Procédé de réalisation n° 2

Le second procédé de réalisation d'un support selon la présente invention débute par le dépôt, sur un substrat 200 en silicium, d'une couche de confinement inférieure 201 en silice comme le montrent les figures 2A et 2B, la figure 2A étant une vue en coupe selon l'axe AA de la figure 2B et la figure 2B étant une vue en coupe selon l'axe BB de la figure 2A.

La couche 201 est ensuite gravée sur une partie de son épaisseur comme indiqué sur les figures 2C et 2D, la figure 2C étant une vue en coupe selon l'axe CC de la figure 2D et la figure 2D étant une vue en coupe selon l'axe DD de la figure 2C. La gravure produit un motif semblable au motif selon lequel était gravée la couche de confinement inférieure dans le premier procédé de réalisation : ébauches de guide optique 203 et 204, flancs 207 et 208.

Comme pour le premier procédé de réalisation, une couche d'arrêt sacrificielle 210 est déposée sur la couche de confinement inférieure 201 gravée. La couche d'arrêt est gravée selon un motif analogue à celui du premier procédé de réalisation. On remarque, sur la figure 2F, que les parties gravées de la couche d'arrêt recouvrent notamment, en 211 et 212, les flancs 207 et 208. La figure 2E est une vue en coupe selon l'axe EE de la figure 2F. La figure 2F est une vue en coupe selon l'axe FF de la figure 2E.

Une couche de coeur 202 est ensuite déposée, puis une couche de confinement supérieure 220 (voir les figures 2E et 2F).

Les couches de coeur 202 et de confinement supérieur 220 sont ensuite gravées pour achever les guides optiques et faire apparaître les parties préservées de la couche d'arrêt qui sont ensuite enlevées.

Sur les figures 2G et 2H (la figure 2G étant une vue en coupe selon l'axe GG de la figure 2H et la figure 2H étant une vue en coupe selon l'axe HH de la figure 2G) on a fait figurer en trait mixte un composant optoélectronique 230 rapporté sur le support. Il repose, par ses bords latéraux, sur la base de la couche de coeur 202 et est mis en contact avec les guides optiques 224 et 226 constitués sur le support.

### Procédé de réalisation n° 3

Ce procédé est illustré par les figures 3A à 3J pour lesquelles les figures 3A, 3C, 3E, 3G et 3I sont des vues en coupe des figures 3B, 3D, 3F, 3H et 3J respectivement et inversement.

Ce procédé débute de la même manière que le premier procédé décrit. Une couche de confinement inférieure 301 est d'abord déposée sur le substrat 300. On dépose ensuite une couche de coeur 302. Ces deux couches sont gravées pour fournir des ébauches 303 et 304 de guides optiques et des flancs 307 et 308.

On procède ensuite à une gravure intermédiaire des flancs, localisée sur leur rebord intérieur, afin de constituer des zones d'appui 317 sur le flanc 307 et 318 sur le flanc 308.

Comme précédemment, une couche d'arrêt 310 est également déposée et gravée afin de protéger les zones d'appui. Ensuite une couche de confinement supérieure 320 est déposée sur l'ensemble des couches précédemment déposées.

La couche de confinement supérieure 320 est ensuite gravée pour achever les guides optiques 324 et 326 et faire apparaître les parties préservées de la couche d'arrêt 310. Celles-ci sont alors enlevées pour révéler les zones d'appui 317 et 318.

Sur les figures 3I et 3J on a fait figurer en trait mixte un composant optoélectronique 330 rapporté sur le support. Il repose, par ses bords latéraux, sur les zones d'appui intermédiaires 317 et 318 de la couche de coeur 302 et est mis en contact avec les guides optiques 324 et 326 constitués sur le support.

### Procédé de réalisation n° 4

Au lieu d'utiliser le dépôt d'une couche d'arrêt comme dans les procédés décrits précédemment, on peut utiliser le procédé connu sous le nom de procédé "lift-off" pour dégager des zones d'appui à la base de la couche de coeur ou sur son sommet. Ce procédé est illustré par les figures 4A à 4H qui s'appliquent au cas où les zones d'appui sont choisies au sommet de la couche de coeur.

Une couche de confinement inférieure 401 est d'abord déposée sur le substrat 400 puis une couche de coeur 402 (voir les figures 4A et 4B). Ces deux couches sont gravées pour fournir des ébauches 403 et 404 de guides optiques et des flancs 407 et 408 (voir les figures 4C et 4D).

Une couche de résine est alors déposée sur les couches déposées précédemment. Sur cette couche de résine on dépose une couche protectrice sur des zones de la résine à préserver, c'est-à-dire sur toute la surface de la résine à l'exception des zones correspondant aux futurs guides optiques. Au développement, on obtient ce qui est représenté aux figures 4E et 4F où l'on reconnaît la couche de résine 450 et sa couche protectrice 451, ainsi que les ébauches de guide 403 et 404 mises à nu.

On dépose ensuite la couche de confinement supérieure sur les couches déposées précédemment. La résine subsistante est enlevée par la technique dite de "lift-off". On obtient alors la structure représentée aux figures 4G et 4H où la couche de confinement supérieure 420 est réduite à la partie recouvrant les guides optiques 424 et 426. Un composant optoélectronique 430, rapporté sur le support est représenté en trait mixte. Il repose, par ses bords latéraux sur le sommet de la couche de coeur et est mis en contact optique avec les guides optiques 424 et 426.

Parmi les composants susceptibles d'être reportés sur le support selon l'invention, on peut citer :
- une source laser à semiconducteur, à émission par la tranche, isolé ou en réseau unidimensionnel (barrette) ;
- un amplificateur à semi-conducteur, isolé ou en barrette ;
- un modulateur pour optique intégré en LiNbO₃ ;
- un amplificateur pour optique intégré en verre dopé ;
- une ou plusieurs fibres optiques logées dans un support micromécanique, isolé ou en barrette, réalisé à l'aide de V gravés dans le silicium.

Les zones d'appui obtenues selon l'invention ne sont pas obligatoirement latérales. En fonction du composant à rapporter, elles peuvent occuper d'autres positions.

## Revendications

1. Support destiné à l'optoélectronique hybride, comportant au moins un guide optique intégré (124, 126) et constitué à partir d'un substrat (100) sur lequel le guide optique a été réalisé par dépôt d'un matériau approprié déposé sur le substrat pour former une couche de confinement inférieure (101), une couche de coeur de guide (102) et une couche de confinement supérieure (120), le guide optique étant destiné à être connecté optiquement à un composant optoélectronique (130) rapporté sur le support, le support comportant des moyens de positionnement du composant (130) afin d'assurer son alignement optique avec le guide optique (124,126), les moyens de positionnement comprenant des zones d'appui pour le composant pour assurer, son positionnement vertical, **caractérisé en ce que** lesdites zones d'appui sont situées à un niveau choisi parmi les niveaux suivants : le sommet de la couche de coeur et un plan intermédiaire entre la base de la couche de coeur et son sommet.

2. Support selon la revendication 1, **caractérisé en ce que** le substrat est en silicium et le guide optique en silice.

3. Procédé de réalisation d'un support tel que défini dans l'une des revendications 1 ou 2, **caractérisé en ce qu'**il comprend les étapes suivantes :
apparaître une ébauche de guide optique (103,104) et laisser subsister des parties de la couche de coeur destinées à constituer lesdites zones d'appui,
- dépôt d'une couche d'arrêt sacrificielle (110) sur les couches déposées précédemment,
- gravure de la couche d'arrêt (110), la couche d'arrêt étant préservée sur les zones d'appui,
- dépôt de la couche de confinement supérieure (120) sur les couches déposées précédemment,
- gravure de la couche de confinement supérieure (120) pour achever le guide optique (124,126) si nécessaire et pour faire apparaître les parties préservées de la couche d'arrêt (110),
- enlèvement des parties préservées de la couche d'arrêt (110) pour révéler les zones d'appui.

4. Procédé de réalisation d'un support tel que défini dans l'une des revendications 1 ou 2, **caractérisé en ce qu'**il comprend les étapes suivantes :
- dépôt de la couche de confinement inférieure (301) sur le substrat (300),
- dépôt de la couche de coeur (302) sur la couche de confinement inférieure (301),
- gravure de la couche de coeur (302) et de la couche de confinement inférieure (301) pour faire apparaître une ébauche de guide optique (303,304) et laisser subsister des parties de la couche de coeur dans lesquelles seront constituées lesdites zones d'appui,
- constitution desdites zones d'appui (317,318) par gravure des parties de la couche de coeur correspondantes,
- dépôt d'une couche d'arrêt sacrificielle (310) sur les couches déposées précédemment,
- gravure de la couche d'arrêt (310), la couche d'arrêt étant préservée sur les zones d'appui,
- dépôt de la couche de confinement supérieure (320) sur les couches précédemment déposées,
- gravure de la couche de confinement supérieure (320) pour achever le guide optique (324,326) si nécessaire et pour faire apparaître les parties préservées de la couche d'arrêt (310),
- enlèvement des parties préservées de la couche d'arrêt pour révéler les zones d'appui (317,318).

5. Procédé de réalisation d'un support tel que défini dans l'une des revendications 1 ou 2, **caractérisé en ce qu'**il comprend les étapes suivantes :
- dépôt de la couche de confinement inférieure (401) sur le substrat (400),
- dépôt de la couche de coeur (402) sur la couche de confinement inférieure (401),
- gravure de la couche de coeur (402) et de la couche de confinement inférieure (401) pour faire apparaître une ébauche de guide optique (403,404) et laisser subsister des parties de la couche de coeur destinées à constituer lesdites zones d'appui,
- dépôt d'une couche de résine (450) sur les couches déposées précédemment,
- dépôt d'une couche protectrice (451) sur la couche de résine (450) à l'exception de la zone correspondant au futur guide optique,
- enlèvement de la zone non protégée de la couche de résine (450), -
- dépôt de la couche de confinement supérieure (420) sur les couches précédemment déposées,
- enlèvement de la résine subsistante par la technique dite de "lift-off", ce qui fait apparaître le guide optique (424,426) et les zones d'appui.

## Claims

1. Support for use in the field of hybrid optoelectronics comprising at least one integrated optical guide (124, 126) and consisting of a substrate (100) on which the optical guide is created by applying a deposit of a suitable material to the substrate to create a lower confinement layer (101), a guide core layer (102) and an upper confinement layer (102), the optical guide being designed to be optically connected to an optoelectronic component (130) mounted on the support, the support comprising means for positioning component (130) to ensure its optical alignment with the optical guide (124, 126), said positioning means comprising abutments to ensure the vertical positioning of the component, **characterized in that** said abutments are located at one of the following levels: the top of the core layer and an intermediate plane between the bottom of the core layer and its top.

2. Support according to claim 1, **characterized in that** the substrate is made of silicon while the optical guide is made of silica.

3. Process for producing a support as defined in claim 1 or 2, **characterized in that** it includes the following steps:
- depositing of the lower confinement layer (101) on the substrate (100),
- depositing of the core layer (102) on lower confinement layer (101),
- etching of core layer (102) and lower confinement layer (101) to produce a blank of an optical guide (103, 104), leaving intact those areas of the core layer designed to constitute said abutments,
- application of a sacrificial barrier layer (110) to the previously-deposited layers,
- etching of the barrier layer (110), the barrier layer being protected in the area of the abutments,
- depositing of the upper confinement layer (120) on the previously-deposited layers,
- etching of the upper confinement layer (120) to finish the optical guide (124, 126) where required and to expose the intact areas of the barrier layer (110),
- removal of the intact areas of the sacrificial barrier layer (110) to expose the abutments.

4. Process for producing a support as defined in claim 1 or 2, **characterized in that** it includes the following steps:
- depositing of the lower confinement layer (301) on substrate (300),
- depositing of the core layer (302) on the lower confinement layer (301),
- etching of the core layer (302) and lower confinement layer (301) to expose an optical guide blank (303, 304) and leave protected those areas of the core layer designed to constitute said abutments,
- constituting said abutments (317, 318) by etching the appropriate areas of the core layer,
- depositing a sacrificial barrier layer (310) on the previously-deposited layers,
- etching the barrier layer (310), the layer being protected in the areas of the abutments,
- depositing the upper confinement layer (320) on the previously-deposited layers,
- etching the upper confinement layer (320) to finish the optical guide (324, 326) if necessary and to expose the protected areas of the barrier layer (310),
- removing the protected areas of the barrier layer to expose the abutments (317, 318).

5. Process for producing a support as defined in claim 1 or 2, **characterized in that** it includes the following steps:
- depositing of the lower confinement layer (401) on substrate (400),
- depositing of the core layer (402) on the lower confinement layer (401),
- etching of the core layer (402) and lower confinement layer (401) to expose an optical guide blank (403, 404) and leave intact those areas of the core layer designed to constitute said abutments,
- depositing of a layer of resin (450) on the previously-deposited layers,
- depositing of a protective layer (451) on the resin layer (450) except for the area designed to be the optical guide,
- removing the unprotected area of the resin layer (450),
- depositing the upper confinement layer (420) on the previously-deposited layers,
- removing the remaining resin using the "lift-off" technique to expose the optical guide (424, 426) and the abutments.

## Patentansprüche

1. Träger, bestimmt für die hybride Optoelektronik, mit wenigstens einem integrierten optischen Leiter (124,126), ausgebildet auf einem Substrat (100), auf dem der optische Leiter realisiert worden ist durch Abscheidung eines entsprechenden Materials bzw. entsprechender Materialien zur Bildung einer unteren Einschließschicht (101), einer Leiterkemschicht (102) und einer oberen Einschließschicht (120) auf dem Substrat, wobei der optische Leiter dazu bestimmt ist, optisch mit einem dem Träger hinzugefügten optoelektronischen Bauelement (130) verbunden zu werden, der Träger Positionierungseinrichtungen des Bauelements (130) umfasst, um seine optische Ausrichtung mit dem optischen Leiter (124,126) zu gewährleisten, und die Positionierungseinrichtungen Stützzonen für das Bauelement umfassen, um seine vertikale Positionierung zu gewährleisten, **dadurch gekennzeichnet, dass** die genannten Stützzonen sich auf einem Niveau befindet, das man unter den folgenden Niveaus auswählt: der Oberseite der Kernschicht und einer intermediären Ebene zwischen der Unterseite der Kernschicht und ihrer Oberseite.

2. Träger nach Anspruch 1, **dadurch gekennzeichnet, dass** das Substrat aus Silicium ist und der optische Leiter aus Siliciumdioxid.

3. Verfahren zur Realisierung eines Trägers wie definiert in einem der Ansprüche 1 oder 2, **dadurch gekennzeichnet, dass** es die folgenden Schritte umfasst:
- Abscheiden der unteren Einschließschicht (101) auf dem Substrat (100),
- Abscheiden der Kernschicht (102) auf der unteren Einschließschicht (101),
- Ätzen der Kernschicht (102) und der unteren Einschließschicht (101), so dass ein Rohling bzw. Vorprofil des optischen Leiters (103,104) erscheint und Teile der Kernschicht erhalten bleiben, die dazu bestimmt sind, die genannten Stützzonen zu bilden,
- Abscheiden einer Opfer-Sperrschicht (110) auf den vorhergehend abgeschiedenen Schichten,
- Ätzen der Sperrschicht (110), wobei die Sperrschicht auf den Stützzonen erhalten bleibt,
- Abscheiden der oberen Einschließschicht (120) auf den vorhergehend abgeschiedenen Schichten,
- Ätzen der oberen Einschließschicht (120), um den optischen Leiter (124,126) fertigzustellen wenn notwendig und um die erhalten gebliebenen Teile der Sperrschicht (110) erscheinen zu lassen,
- Entfernen der erhalten gebliebenen Teile der Sperrschicht (110), um die Stützzonen frei zu machen.

4. Verfahren zur Herstellung eines Trägers wie definiert in einem der Ansprüche 1 oder 2, **dadurch gekennzeichnet, dass** es die folgenden Schritte umfasst:
- Abscheiden der unteren Einschließschicht (301) auf dem Substrat (300),
- Abscheiden der Kernschicht (302) auf der unteren Einschließschicht (301),
- Ätzen der Kernschicht (302) und der unteren Einschließschicht (301), so dass ein Rohling bzw. Vorprofil des optischen Leiters (303,304) erscheint und Teile der Kernschicht erhalten bleiben, in denen die genannten Stützzonen ausgebildet werden,
- Ausbilden der genannten Stützzonen (317,318) durch Ätzen der entsprechenden Teile der Kernschicht,
- Abscheiden einer Opfer-Sperrschicht (310) auf den vorhergehend abgeschiedenen Schichten,
- Ätzen der Sperrschicht (310), wobei die Sperrschicht auf den Stützzonen erhalten bleibt,
- Abscheiden der oberen Einschließschicht (320) auf den vorhergehend abgeschiedenen Schichten,
- Ätzen der oberen Einschließschicht (320), um den optischen Leiter (324,326) fertigzustellen wenn notwendig und um die erhalten gebliebenen Teile der Sperrschicht (310) erscheinen zu lassen,
- Entfernen der erhalten gebliebenen Teile der Sperrschicht, um die Stützzonen (317,318) frei zu machen.

5. Verfahren zur Realisierung eines Trägers wie definiert in einem der Ansprüche 1 oder 2, **dadurch gekennzeichnet, dass** es die folgenden Schritte umfasst:
- Abscheiden der unteren Einschließschicht (401) auf dem Substrat (400),
- Abscheiden der Kernschicht (402) auf der unteren Einschließschicht (401),
- Ätzen der Kernschicht (402) und der unteren Einschließschicht (401), so dass ein Rohling bzw. Vorprofil des optischen Leiters (403,404) erscheint und Teile der Kernschicht erhalten bleiben, die dazu bestimmt sind, die genannten Stützzonen zu bilden,
- Abscheiden einer Resistschicht (450) auf den vorhergehend abgeschiedenen Schichten,
- Abscheiden einer Schutzschicht (451) auf der Resistschicht (450) mit Ausnahme der dem zukünftigen optischen Leiter entsprechenden Zone,
- Entfernen der nicht durch die Resistschicht (450) geschützten Zone,
- Abscheiden der oberen Einschließschicht (420) auf den vorhergehend abgeschiedenen Schichten,
- Entfernen des erhalten gebliebenen Resists mittels der "Lift-off"-Technik, was den optischen Leiter (424,426) und die Stützzonen erscheinen lässt.
